# EUROPÄISCHE PATENTANMELDUNG

(11) **EP 4 401 327 A1**
(43) Veröffentlichungstag der Anmeldung: **17.07.2024**
(21) Anmeldenummer: 23151409.2
(22) Anmeldetag: 12.01.2023
(51) Int. Cl.: H04B 7/04, H04B 7/06

(54) **DRAHTLOSES KOMMUNIKATIONSSYSTEM**

(71) Anmelder: Siemens AG Österreich, 1210 Wien (AT)
(72) Erfinder: Mayer, Lukas Walter, 1190 Wien (AT); Gila, Janos, 2340 Mödling (AT); Hofmann, Andreas, 1140 Wien (AT); Schiefer, Martin, 3100 St. Pölten (AT)
(74) Vertreter: Siemens Patent Attorneys

(57) **Zusammenfassung**

Drahtloses Kommunikationssystem, umfassend einen Sender (TRX1), einen Empfänger (TRX2) und einen elektronisch steuerbaren Reflektor (RIS2), wobei der Sender (TRX1) dazu eingerichtet ist, ein Signal in Richtung des Reflektors (RIS2) zu senden, und der Reflektor (RIS2) dazu eingerichtet ist, das Signal zu empfangen und in Richtung des Empfängers (TRX2) zu reflektieren, dadurch gekennzeichnet, dass der Reflektor (RIS2) ferner dazu eingerichtet ist, das Signal innerhalb eines Winkel-Bereichs von einer ersten Grenze (B2A) zu einer zweiten Grenze (B2B) mit winkelabhängigen Reflexions-Faktoren zu reflektieren, wo-bei der Signalpfad des reflektierten Signals an der ersten Grenze (B2A) eine erste Länge (LB2A) aufweist, und der Signalpfad des reflektierten Signals an der zweiten Grenze (B2B) eine zweite Länge (LB2B) aufweist, und der Signalpfad des reflektierten Signals in der Mitte zwischen der ersten und der zweiten Grenze (B2A, B2B) eine mittlere Länge (LB2) aufweist, und eine Längendifferenz (DL) zwischen der ersten Länge (LB2A) und der zweiten Länge (LB2B) zumindest 20% beträgt, und der Reflektor (RIS2) dazu eingerichtet ist, den winkelabhängigen Reflexions-Faktor an der ersten Grenze (B2A) gegenüber der mittleren Länge (LB2) zu vergrößern und winkelabhängigen Re-flexions-Faktor an der zweiten Grenze (B2B) zu verringern.

## Beschreibung

Die Erfindung betrifft ein drahtloses Kommunikationssystem, umfassend einen Sender, einen Empfänger und einen elektronisch steuerbaren Reflektor, wobei der Sender dazu eingerichtet ist, ein Signal in Richtung des Reflektors zu senden, und der Reflektor dazu eingerichtet ist, das Signal zu empfangen und in Richtung des Empfängers zu reflektieren.

Elektronisch steuerbare Reflektoren können vielfältig eingesetzt werden, beispielsweise um eine Signalausleuchtung von einem Sender an durch Hindernisse oder Objekte abgeschatteten Orten zu verbessern.

Dies kann beispielsweise in einer Industriehalle erfolgen, um die Empfangseigenschaften individueller Arbeitsbereiche mit dort eingesetzten Funk-Systemen, also drahtlose Kommunikationssysteme beispielsweise nach dem 5G-Standard, mithilfe eines jeweiligen elektronisch steuerbaren Reflektors zu verbessern, und eine Funk-Verbindung zu schaffen, welche über keine direkte Kommunikation zwischen Sender und Empfänger, also einer abgedeckten Verbindung (engl. "non-line of sight") verfügen

Ein elektronisch intelligent steuerbarer Reflektor kann in seinem Reflexions-Winkel räumlich, individuell sowohl für einen horizontalen Winkel Phi als auch für einen vertikalen Winkel Theta, eingestellt werden.

Der Reflektor kann derart angeordnet werden, sodass ein Sender und ein Empfänger innerhalb eines günstigen Arbeitsbereichs für den Reflektor zur Abdeckung einer Kommunikationstrecke zwischen Sender, Reflektor und Empfänger liegen. Dieser Arbeitsbereich kann näherungsweise durch einen Kegel beschrieben werden, in dessen Kegelspitze der Reflektor angeordnet ist. Typischer liegt der Öffnungswinkel des Kegels bei 90°.

Die Reflexionseigenschaften des Reflektors können über diesen Arbeitsbereich frei eingestellt werden.

Jedoch sind die möglichen Winkeleinstellungen für die Winkel Phi und Theta begrenzt, was die Anwendung eines intelligent und elektronisch steuerbaren Reflektors einschränkt.

Es ist Aufgabe der Erfindung eine Anordnung eines drahtlosen Kommunikationssystems eingangs genannter Art zu schaffen, welches einen verbesserten Anwendungsbereich beziehungsweise eine verbesserte Funkausleuchtung des drahtlosen Kommunikationssystems im Bereich des Empfängers erlaubt.

Die Aufgabe wird durch ein System eingangs genannter Art gelöst, wobei der Reflektor ferner dazu eingerichtet ist, das Signal innerhalb eines Winkel-Bereichs von einer ersten Grenze zu einer zweiten Grenze mit winkelabhängigen Reflexions-Faktoren zu reflektieren, wobei der Signalpfad des reflektierten Signals an der ersten Grenze eine erste Länge aufweist, und der Signalpfad des reflektierten Signals an der zweiten Grenze eine zweite Länge aufweist, und der Signalpfad des reflektierten Signals in der Mitte zwischen der ersten und der zweiten Grenze eine mittlere Länge aufweist, und eine Längendifferenz zwischen der ersten Länge und der zweiten Länge zumindest 20% beträgt, und der Reflektor dazu eingerichtet ist, den winkelabhängigen Reflexions-Faktor an der ersten Grenze gegenüber der mittleren Länge zu vergrößern und winkelabhängigen Reflexions-Faktor an der zweiten Grenze zu verringern.

Der Reflektor weist steuerbare Reflektor-Elemente mit jeweilig einstellbaren Reflexions-Faktoren auf. Durch eine entsprechende Ansteuerung der angeordneten Reflektor-Elemente können die Reflexions-Eigenschaften des Reflektors beispielsweise winkelabhängig eingestellt werden, welche mithilfe einer Antennen-/ Reflektor-Apertur darstellbar ist.

Für die Konfiguration wird die Geometrie der Anordnung im Raum erfasst und in eine entsprechende Verteilung der Reflexions-Eigenschaften für die steuerbaren Reflektor-Elemente des Reflektors mithilfe mathematischer, geometrischer Operationen umgerechnet.

Es wird dadurch erreicht, dass die Fläche, auf welcher der Empfänger angeordnet ist, gleichmäßiger ausgeleuchtet wird.

Es ist klar, dass die erste Grenze, an welcher der Reflexions-Faktor vergrößert ist, weiter vom Ort des Reflektors entfernt ist, um die Empfangsfeldstärke dementsprechend zu verbessern, als die zweite Grenze, an welcher der Reflexions-Faktor verringert ist, um die Empfangsfeldstärke dementsprechend zu reduzieren, und insgesamt eine verbesserte Verteilung der Empfangsfeldstärke über die gesamte Empfangsfläche, auf welcher der Empfänger angeordnet ist, zu erhalten.

Der jeweilige Reflexions-Faktor kann am Reflektor über ein jeweiliges Reflektor-Element eingestellt werden, wodurch winkelabhängig eine Reflektor-Charakteristik erzielt wird.

In einer Weiterbildung der Erfindung ist es vorgesehen, dass die Längendifferenz zumindest 30% und bevorzugt zumindest 50% beträgt.

In einer Weiterbildung der Erfindung ist es vorgesehen, dass das System in einem Raum angeordnet ist.

In einer Weiterbildung der Erfindung ist es vorgesehen, dass eine gedachte Sichtlinie mit einer Sichtlinien-Länge zwischen dem Sender und dem Empfänger gebildet ist, und ein gedachtes Dreieck aus der ersten Länge, der zweiten Länge und der Sichtlinien-Länge einen stumpfen Winkel am Empfänger aufweist.

Die Aufgabe wird auch durch ein System eingangs genannter Art gelöst, wobei der Reflektor ferner dazu eingerichtet ist, das Signal innerhalb eines Winkel-Bereichs von einer ersten Grenze zu einer zweiten Grenze mit winkelabhängigen Reflexions-Faktoren zu reflektieren, wobei der Signalpfad des reflektierten Signals an der ersten Grenze eine erste Länge aufweist, und der Signalpfad des reflektierten Signals an der zweiten Grenze eine zweite Länge aufweist, und der Signalpfad des reflektierten Signals in der Mitte zwischen der ersten und der zweiten Grenze eine mittlere Länge aufweist, und eine gedachte Sichtlinie mit einer Sichtlinien-Länge zwischen dem Sender und dem Empfänger gebildet ist, und ein gedachtes Dreieck aus der ersten Länge, der zweiten Länge und der Sichtlinien-Länge einen stumpfen Winkel am Empfänger aufweist, und der Reflektor dazu eingerichtet ist, den winkelabhängigen Reflexions-Faktor an der ersten Grenze gegenüber der mittleren Länge zu vergrößern und winkelabhängigen Reflexions-Faktor an der zweiten Grenze zu verringern.

Die Erfindung wird nachfolgend anhand eines in den beigeschlossenen Zeichnungen dargestellten Ausführungsbeispiels näher erläutert.

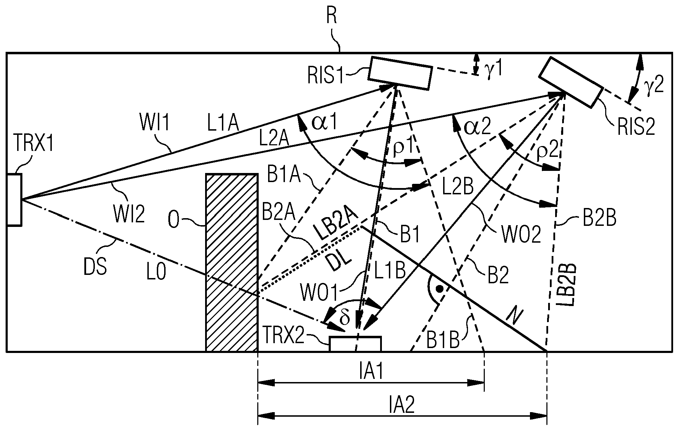

Die Figur zeigt ein erstes Ausführungsbeispiel der Erfindung.

Zunächst ist ein drahtloses Kommunikationssystem nach dem Stand der Technik gezeigt, welches einen Sender TRX1, einen Empfänger TRX2 und einen elektronisch steuerbaren Reflektor RIS1 umfasst.

Ein Signal WI1 kann vom Sender TRX1 zu einem Reflektor RIS1 gesendet werden und weiter als Signal WO1 zu einem Empfänger TRX2 reflektiert werden, wobei das Signal Längen L1A und L1B zurücklegt.

Der Reflektor weist einen steuerbaren Bereich ρ1 auf.

Durch die Anordnung von Sender TRX1, Reflektor RIS1 und Empfänger TRX2 wird gemeinsam mit einem Montagewinkel γ1 des Reflektors ein effektiver Winkelbereich α1 für den Reflektor RIS1 gebildet.

Der Empfänger TRX2 kann innerhalb einer ausgeleuchteten Fläche IA1 angeordnet sein, in welcher mithilfe des Reflektors RIS1 ein Empfang des vom Sender TRX1 gesendeten Signals erfolgen kann.

Es ist ferner ein erfindungsgemäßes drahtloses Kommunikationssystem gezeigt, welches einen Sender TRX1, einen Empfänger TRX2 und einen elektronisch steuerbaren Reflektor RIS2 umfasst und in einem Raum R angeordnet ist.

Der Sender TRX1 ist dazu eingerichtet, ein Signal WI2 in Richtung des Reflektors RIS2 zu senden.

Der intelligente, elektronisch steuerbare Reflektor RIS2 ist dazu eingerichtet, das Signal vom Sender TRX1 zu empfangen und weiter als Signal WO2 in Richtung des Empfängers TRX2 zu reflektieren.

Der Signalpfad B1 des reflektierten Signals in der Mitte zwischen der ersten und der zweiten Grenze B1A, B1B des ersten Reflektors RIS1 weist eine mittlere Länge auf.

Der Reflektor RIS2 weist einen steuerbaren Bereich ρ2 auf, welcher dem steuerbaren Bereich ρ1 des Reflektors RIS1 entsprechen kann.

Durch die Anordnung von Sender TRX1, Reflektor RIS2 und Empfänger TRX2 wird gemeinsam mit einem Montagewinkel γ2 des Reflektors, gemessen gegenüber der Horizontalen des Raums R, ein effektiver Winkelbereich α2 für den Reflektor RIS2 gebildet.

Es ist in der Figur erkennbar, dass der effektive Winkelbereich α2 für den Reflektor RIS2 deutlich über dem effektiven Winkelbereich α1 für den Reflektor RIS1 liegt.

Umgekehrt kann somit der effektive Winkelbereich für den Reflektor RIS2 kleiner eingestellt werden, sodass eine ausgeleuchtete Fläche IA2 beispielsweise der gezeigten Fläche IA1 entspricht, was vorteilhaft ist, um eine günstige Apertur zu bestimmen und einzustellen, beziehungsweise der gesamte Aufbau des Reflektor RIS2 und dessen Ansteuerung einfacher erfolgen und kostengünstiger kann.

Daher ist die ausgeleuchtete Fläche IA2 durch den Reflektor RIS2 größer als die ausgeleuchtete Fläche IA1 durch den Reflektor RIS1.

Es ist klar, dass eine Übertragung auch in umgekehrter Richtung erfolgen kann, wenn bei Sender und Empfänger jeweilige Transceiver-Funktionen vorliegen.

Der Reflektor RIS2 ist ferner dazu eingerichtet, das Signal innerhalb eines Winkel-Bereichs von einer ersten Grenze B2A zu einer zweiten Grenze B2B mit winkelabhängigen Reflexions-Faktoren zu reflektieren.

Der Signalpfad des reflektierten Signals an der ersten Grenze B2A weist eine erste Länge LB2A auf.

Der Signalpfad des reflektierten Signals an der zweiten Grenze B2B weist eine zweite Länge LB2B auf.

Der Signalpfad B2 des reflektierten Signals in der Mitte zwischen der ersten und der zweiten Grenze B2A, B2B des zweiten Reflektors RIS2 weist eine mittlere Länge auf.

Eine Längendifferenz DL zwischen der ersten Länge LB2A und der zweiten Länge LB2B beträgt zumindest 20%, optional zumindest 30% und bevorzugt zumindest 50%.

Die Längendifferenz DL kann beispielsweise gebildet werden, indem eine Normale N auf den Signalpfad B2 des reflektierten Signals in der Mitte zwischen der ersten und der zweiten Grenze B2A, B2B gelegt wird, wobei die Normale N durch den Schnittpunkt der zweiten Grenze B2B und jener Ebene verläuft, welche durch den Empfänger TRX2 gebildet wird, wie der Boden des Raums R.

Jener Anteil auf der Grenze B2A, welcher zwischen dem Schnittpunkt der ersten Grenze B2A und der Normalen N festgelegt wird, sowie jener Ebene, welche durch den Empfänger TRX2 gebildet wird, wie der Boden des Raums R, oder auch durch einen Schnittpunkt mit einem Hindernis-Objekt O, kann als Längendifferenz DL festgelegt werden.

Der Reflektor RIS2 ist außerdem dazu eingerichtet, den Reflexions-Faktor winkelabhängig an der ersten Grenze B2A gegenüber der mittleren Länge LB2 zu vergrößern und den Reflexions-Faktor winkelabhängig an der zweiten Grenze B2B zu verringern.

Alternativ oder zusätzlich kann eine gedachte Sichtlinie DS mit einer Länge der Sichtlinien L0 zwischen dem Sender TRX1 und dem Empfänger TRX2 gebildet sein.

Ferner kann ein gedachtes Dreieck aus der ersten Länge L2A, der zweiten Länge L2B und der Sichtlinien-Länge L0 einen stumpfen Winkel δ am Empfänger TRX2 aufweisen.

Der Empfänger TRX2 kann innerhalb einer ausgeleuchteten Fläche IA2 angeordnet sein, in welcher mithilfe des Reflektors RIS2 ein Empfang des vom Sender TRX1 gesendeten Signals erfolgen kann.

Die zu überwindenden Strecken der Funk-Wellen WI1 und WO1, welche dem Reflektor RIS1 zugeordnet sind, sind im Vergleich zu den Strecken der Funk-Wellen WI2 und WO2, welche dem Reflektor RIS2 zuzuordnen sind, kürzer.

Dieser Vorteil ist jedoch gering, und wird durch die besseren effektiven Reflexionseigenschaften des Reflektors RIS2 an dessen Position überwunden, so dass für den ausgeleuchteten Bereich IA2 eine bessere Funkübertragung erzielt werden kann.

Eine Konfiguration des steuerbaren Reflektors RIS2 kann in einer Konfigurations-Vorrichtung erfolgen, welche ferner vom Kommunikationssystem umfasst ist und einen Prozessor und einen Speicher aufweist (ist in der Figur nicht gezeigt).

### Bezugszeichenliste:

- γ1, γ2: Montagewinkel des intelligenten Reflektors
- ρ1, ρ2: steuerbarer Bereich des intelligenten Reflektors
- B1, B2: Bereichs-Mitte des steuerbaren Bereichs des intelligenten Reflektors
- B1A, B1B, B2A, B2B: Länge an der Begrenzung des steuerbaren Bereichs des intelligenten Reflektors
- DL: Längen-Differenz
- DS: gedachte Sichtlinie durch Hindernis
- IA1, IA2: ausgeleuchtete Fläche
- L1A, L1B, L2A, L2B: Teil-Länge der Übertragungsstrecke
- N: Normale auf Bereichs-Mitte
- O: Hindernis-Objekt
- R: Raum
- RIS1, RIS2: intelligenter Reflektor
- TRX1, TRX2: Transceiver
- WI1, WI2: eingehende Welle
- WO1, WO2: ausgehende Welle
- α1, α2: effektiver Winkelbereich des intelligenten Reflektors
- δ: stumpfer Winkel

## Patentansprüche

1. Drahtloses Kommunikationssystem, umfassend einen Sender (TRX1), einen Empfänger (TRX2) und einen elektronisch steuerbaren Reflektor (RIS2), wobei der Sender (TRX1) dazu eingerichtet ist, ein Signal in Richtung des Reflektors (RIS2) zu senden, und der Reflektor (RIS2) dazu eingerichtet ist, das Signal zu empfangen und in Richtung des Empfängers (TRX2) zu reflektieren, **dadurch gekennzeichnet, dass** der Reflektor (RIS2) ferner dazu eingerichtet ist, das Signal innerhalb eines Winkel-Bereichs von einer ersten Grenze (B2A) zu einer zweiten Grenze (B2B) mit winkelabhängigen Reflexions-Faktoren zu reflektieren, wobei der Signalpfad des reflektierten Signals an der ersten Grenze (B2A) eine erste Länge (LB2A) aufweist, und der Signalpfad des reflektierten Signals an der zweiten Grenze (B2B) eine zweite Länge (LB2B) aufweist, und der Signalpfad des reflektierten Signals in der Mitte zwischen der ersten und der zweiten Grenze (B2A, B2B) eine mittlere Länge (LB2) aufweist, und eine Längendifferenz (DL) zwischen der ersten Länge (LB2A) und der zweiten Länge (LB2B) zumindest 20% beträgt, und der Reflektor (RIS2) dazu eingerichtet ist, den winkelabhängigen Reflexions-Faktor an der ersten Grenze (B2A) gegenüber der mittleren Länge (LB2) zu vergrößern und winkelabhängigen Reflexions-Faktor an der zweiten Grenze (B2B) zu verringern.

2. System nach dem vorhergehenden Anspruch, wobei die Längendifferenz (DL) zumindest 30% und bevorzugt zumindest 50% beträgt.

3. System nach einem der vorhergehenden Ansprüche, wobei das System in einem Raum (R) angeordnet ist.

4. System nach einem der vorhergehenden Ansprüche, wobei eine gedachte Sichtlinie (DS) mit einer Sichtlinien-Länge (L0) zwischen dem Sender (TRX1) und dem Empfänger (TRX2) gebildet ist, und ein gedachtes Dreieck aus der ersten Länge (L2A), der zweiten Länge (L2B) und der Sichtlinien-Länge (L0) einen stumpfen Winkel (δ) am Empfänger (TRX2) aufweist.
